# EUROPÄISCHE PATENTSCHRIFT

(11) **EP 0 873 898 B1**
(45) Veröffentlichungstag und Bekanntmachung des Hinweises auf die Patenterteilung: **12.06.2002**
(21) Anmeldenummer: 98890119.5
(22) Anmeldetag: 23.04.1998
(51) Int. Cl.: B60J 10/08, B60R 13/06

(54) **Schwenktürflügel für Fahrzeuge**
Pivoting vehicle door wing
Battant de porte d'un véhicule

(30) Priorität: 24.04.1997 AT 25697
(43) Veröffentlichungstag der Anmeldung: 28.10.1998
(73) Patentinhaber: Webasto-Kiekert Bustüren GmbH, 85757 Karlsfeld (DE)
(72) Erfinder: Ritt, Alois, Ing., 3300 Amstetten (AT)
(74) Vertreter: Patentanwälte BARGER, PISO & PARTNER

(56) Entgegenhaltungen:
- EP-A- 0 624 503
- DE-A- 3 314 641
- DE-U- 9 102 623

## Beschreibung

Die Erfindung betrifft einen Schwenktürflügel für Fahrzeuge, insbesondere für Kraftfahrzeuge, der mit Hilfe von Schwenkarmen, die durch eine Drehsäule betätigt werden, nach innen verschwenkt wird und der an seiner unteren waagrechten Kante mit einer Abdichtleiste versehen ist.

Gemäß der Offenbarung des DE 80 09 490 U1 ist dabei vorgesehen, daß die Abdichtleiste schwenkbar, insbesondere verbiegbar oder abknickbar am Schwenktürflügel angebracht ist und daß der untere Schwenkarm unterhalb der Abknickstelle der Abdichtleiste angebracht ist.

Diese Abdichtleiste erstreckt sich nicht über die gesamte Breite des Türflügels, sondern nur über den Teil, der während der Schwenkbewegung in den Bahnbereich des unteren Schwenkarmes gelangt, da ansonsten die hochgeschwenkte Abdichtleiste mit dem Türbaumrohr kollidieren würde. Am restlichen Bereich des Türflügels ist eine Abdichtung in Form einer Bürste vorgesehen, die zugleich einen Anschlag für die Abdichtleiste darstellt.

Die Abdichtleiste selbst besteht gemäß der einzigen dargestellten und nicht weiter besprochenen Ausführungsform aus einem metallischen Profil, das mittels eines im Querschnitt knochenförmigen Gummibandes an ein entsprechendes Profil an der Türunterkante flexibel angelenkt ist. Im Zuge der Öffnungsbewegung des Türflügels stößt die Abdichtleiste an den Schwenkarm, was zur Umbiegung des Gummibandes führt, wodurch die Abdichtleiste von ihrer im wesentlichen lotrechten Dichtlage bei geschlossener Tür zu einer im wesentlichen waagrechten, hochgeschwenkten Lage bei geöffneter Tür gelangt.

Diese Konstruktion weist beim praktischen Einsatz eine Reihe von Nachteilen auf, wobei die rasche Abnutzung sowohl des die Biegungen aufnehmenden Gummibandes als auch der ständig auf Abrieb beanspruchten Abdichtleiste gleichermaßen dem Verschleiß unterliegen. Dazu kommt, daß der mehrteilige Aufbau der gesamten Dichtvorrichtung nicht nur beim ursprünglichen Zusammenbau, sondern auch bei späteren Wartungs- und Austauscharbeiten ein genaues Justieren notwendig macht, was im Bereich des unteren Türblattendes unangenehm ist.

Die Erfindung bezweckt hier Abhilfe zu schaffen und schlägt zu diesem Zweck eine durchgehend aus gummielastischem Material oder Kunststoffmaterial bestehende Abdichtleiste vor, die an der in geschlossener Lage des Türflügels inneren Unterkante schwenkbar befestigt ist.

Durch diese Maßnahme wird nicht nur die Schwenkachse, die bevorzugt als Schwachstelle im Abdichtleistungsmaterial ausgebildet ist, auf die saubere und warme Seite der Türe verlegt, wo sie besser in der Lage ist, mechanischen und Witterungseinflüssen zu widerstehen, sondern es wird in einer besonderen Ausbildung auch ermöglicht, den Schwenkwinkel auf etwa 45° zu beschränken, was gegenüber dem Stand der Technik eine Halbierung dieses Schwenkwinkels bedeutet und wesentlich zur Verbesserung der Lebensdauer der Abdichtleiste beiträgt. Da diese darüberhinaus einteilig ausgebildet ist und bevorzugt über die gesamte Breite des Türflügels reicht, wird auch das Auswechseln wesentlich vereinfacht.

Die Erfindung wird an Hand der beiliegenden Zeichnungen. näher erläutert, wobei
die Fig. 1 einen Schnitt durch einen erfindungsgemäß ausgestalteten Schwenktürflügel in geschlossener Lage darstellt,
die Fig. 2 eine Draufsicht auf eine erfindungsgemäß ausgestaltete Schwenktüre, bei der die geschlossene Lage mit vollen Linien, die geöffnete Lage mit strichlierten Linien eingezeichnet ist und
die Fig. 3 eine erfindungsgemäße Variante der Fig. 1 ist.

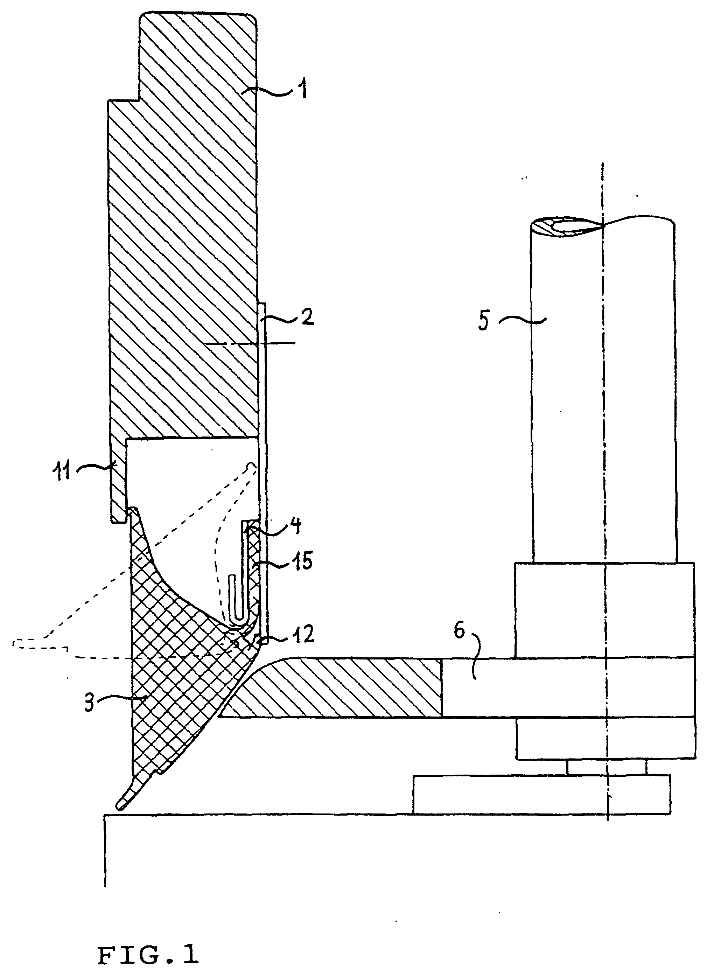

Wie aus Fig. 1 ersichtlich, ist das untere Ende eines Türflügels 1, beispielsweise mittels einer Befestigungsleiste 2, eine Abdichtleiste 3 aus Gummi oder Kunststoffmaterial befestigt. Im dargestellten Beispiel erfolgt die Befestigung mittels einer Gegenleiste 4, worauf das gesamte Ensemble bestehend aus Abdichtleiste 3, Gegenleiste 4 und Befestigungsleiste 2 mit nur mehr wenigen Schrauben oder Nieten am unteren Ende des Türflügels 1 befestigt wird.

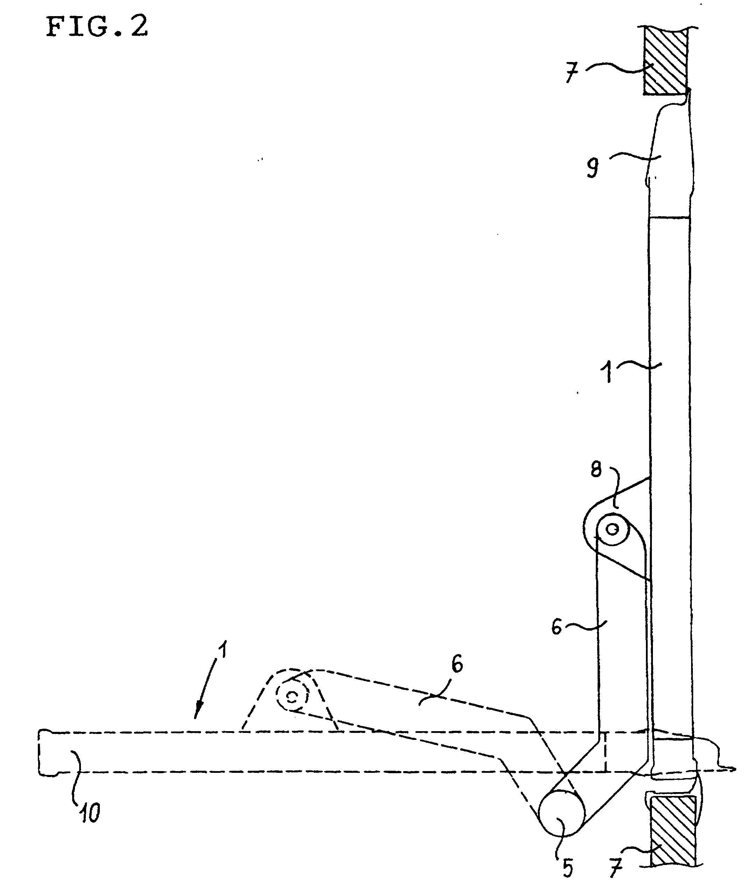

Der Türflügel 1 wird mittels eines Türbaumrohres 5 und daran am unteren und oberen Ende angeordneten Schwenkarmen 6, von denen nur der untere dargestellt ist, auf eine Weise bewegt, die aus der Fig. 2 ersichtlich ist:

In geschlossener Lage des Türflügels 1 schließt dieser eine Öffnung im Fahrzeug, angedeutet durch einen Rahmen 7 ab. Mittels eines Flügels oder Ansatzes 8 oberhalb der Abdichtleiste 3 (und in Fig. 1 nicht dargestellt) ist der Türflügel 1 mit dem Schwenkarm 6 gelenkig verbunden. Beim Öffnen des Türflügels 1 gelangt seine Hauptschließkante 9 in den Bereich der Türöffnung, in dem sich in der geschlossenen Lage die Nebenschließkante 10 befindet, diese wiederum bewegt sich nahezu linear und normal zur Fahrzeugaußenfläche ins Innere des Fahrzeuges.

Im Zuge dieser Bewegung überfährt der Türflügel 1 den Schwenkarm 6, was durch das Hochklappen der Abdichtleiste 3 ermöglicht wird.

Bevorzugt weist der untere Schwenkarm 6 zumindest in dem Bereich, der mit der Abdichtleiste 3 in Berührung kommt, eine Querschnittsform auf, die das Hochschwenken der Abdichtleiste 3 erleichtert, wie dies aus Fig. 1 ersichtlich ist.

Darüberhinaus besteht die Oberfläche des Schwenkarmes 6 in diesem Bereich aus einem die Reibung herabsetzenden Material und ist bevorzugt mit aufgeklemmten, geklebten, geschraubten oder anders befestigten, die Funktion von Scheuerleisten übernehmenden Rippen oder Leisten versehen, die als Verschleißartikel ausgebildet sind und den Schwenkarm 6 bzw. dessen Lackierung vor Abrieb schützen.

Gleicherweise sind bevorzugt auf der Abdichtleiste 3, in dem mit dem Schwenkarm 6 in Berührung kommenden Bereich, die Gleitfähigkeit erhöhende Elemente befestigt oder schon während der Herstellung mit vorgesehen worden.

Wie aus der Fig. 1 hervorgeht, wird die erfindungsgemäße Abdichtleiste 3 nur um etwa 45° verschwenkt, um vollständig aus dem Bewegungsbereich des Schwenkarmes 3 zu gelangen, was eine Halbierung des Verschwenkwinkels bezüglich des Standes der Technik bedeutet und sich in einem weit überproportionalen Herabsetzen des zugehörigen Verschleißes und Beanspruchens im Schwenkachsenbereich bedeutet.

Gemäß Fig. 1 ist das Türblatt 1 mit einem äußeren Überstand 11 ausgebildet, der eine Begrenzung der Schwenkmöglichkeit der Abdichtleiste 3 darstellt. Im gezeigten Beispiel ist die Abdichtleiste 3 mit einer Zusatzlippe 12 versehen, die an der Befestigungsleiste 2 anliegt, wenn das Türblatt 1 die geschlossene Position einnimmt und somit ebenfalls eine Begrenzung der Schwenkbewegung der Abdichtleiste 3 zum Ziel hat.

Die Gegenleiste 4 ist bevorzugt, wie in Fig. 1 dargestellt, an ihrem unteren Ende abgebogen oder umgebördelt, um eine gleichmäßige Verteilung der Verformung der Befestigungslippe 15 der Abdichtleiste 3 während der Schwenkbewegung zu bewirken, wodurch die Lebensdauer der Abdichtleiste 3 weiter erhöht wird.

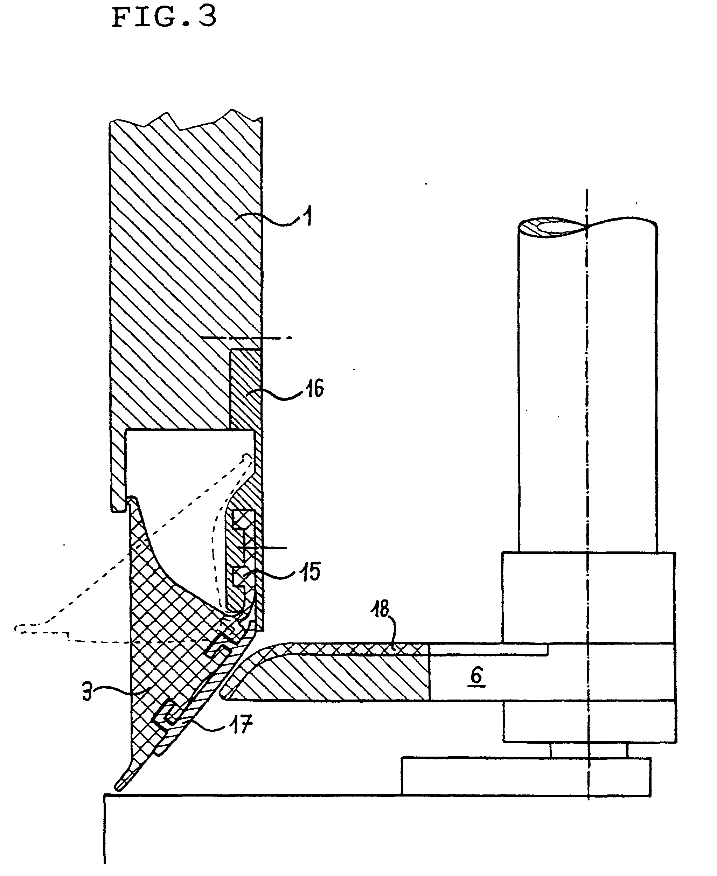

Die Variante gemäß Fig. 3 zeigt eine einstückige Ausbildung der Befestigungsleiste 2 und der Gegenleiste 4 in Form eines Halteprofiles 16, das (auf nicht dargestellte Weise) mit dem Türflügel 1 verbunden ist. In diesem Ausführungsbeispiel trägt die Abdichtleiste 3 eine Scheuerleiste 17, die auch aus einzelnen, kurzen Abschnitten bestehen kann und besonders bezüglich der Aufdoppelung 18 des Schwenkarmes 6 einen geringen Reibungskoeffizienten aufweist. Die Scheuerleiste 17 wird bevorzugt auf die Abdichtleiste aufgeschoben, so wie diese bei der Variante gemäß Fig. 3 in das Halteprofil 16 geschoben wird.

Die Erfindung ist nicht auf die dargestellten Ausführungsbeispiele beschränkt, sondern kann verschiedentlich abgewandelt werden. So kann beispielsweise die Befestigungsleiste 2 in eine Ausnehmung des Türflügels 1 zu liegen kommen, um an der Türinnenseite bündig mit der Innenseite des Türflügels abzuschließen. Es kann eine erfindungsgemäß ausgerüstete Türe selbverständlich auch zwei Türflügel umfassen.

Die Abdichtleiste 3 besteht aus einem üblicherweise für Dichtungen für Fahrzeugtüren verwendeten gummielastischem Material wie Gummi, Kunst- oder Naturkautschuk, oder Kunststoffmaterial, etc. und kann gegebenenfalls verstärkt sein. Als Materialien kommen für die Befestigungsleiste 2, die Gegenleiste 3 bzw. das Halteprofil 16 Aluminium, gegebenenfalls als Stranggußprofil, für die Gegenleiste 3 u.U. auch rostfreier Stahl, in Frage. Die Scheuerleiste 17 kann aus thermoplastischem Polyester oder Polyamid bestehen, die Aufdoppelung 18 kann aus Polyamid oder auch rostfreiem Stahl bestehen. In Kenntnis der Erfindung und der jeweiligen Beanspruchungen kann der Fachmann auf dem Gebiete des Türenbaues für Fahrzeuge aber jederzeit andere, ihm geeignet erscheinende Werkstoffe einsetzen.

## Patentansprüche

1. Schwenktürflügel (1) für Fahrzeuge, insbesondere für Kraftfahrzeuge, der mit Hilfe von Schwenkarmen (6), die durch eine Drehsäule (5) betätigt werden, nach innen verschwenkt wird und der an seiner unteren waagrechten Kante mit einer schwenkbaren Abdichtleiste (3) versehen ist, **dadurch gekennzeichnet, daß** die Abdichtleiste (3) durchgehend aus gummielastischem Material oder Kunststoffmaterial besteht und an der in der geschlossenen Lage des Türflügels (1) inneren Unterkante des Türflügels (1) schwenkbar befestigt ist.

2. Türflügel nach Anspruch 1, **dadurch gekennzeichnet, daß** die Höhe H der Abdichtkante (3) nicht größer ist als die doppelte Stärke S des Türflügels (1).

3. Türflügel nach einem der vorstehenden Ansprüche, **dadurch gekennzeichnet, daß** die Abdichtkante (3) um eine Schwächungsstelle ihrer Material.stärke schwenkbar ist.

4. Türflügel nach einem der vorstehenden Ansprüche, **dadurch gekennzeichnet, daß** die Abdichtkante (3) zumindest in Bereichen, in denen sie mit dem Schwenkhebel (6) in Berührung kommt, mit einer, gegebenenfalls gestückelten, Scheuerleiste (17) versehen ist.

5. Türflügel nach einem der vorstehenden Ansprüche, **dadurch gekennzeichnet, daß** der Schwenkhebel (6) zumindest in dem Bereich, in dem er mit der Abdichtkante (3) in Berührung kommt, mit einer Aufdoppelung (18) versehen ist.

6. Türflügel nach einem der vorstehenden Ansprüche, **dadurch gekennzeichnet, daß** die Abdichtkante (3) in ein Halteprofil (16) eingeschoben und mittels diesem am Türflügel (1) befestigt ist.

7. Türflügel nach einem der vorstehenden Ansprüche, **dadurch gekennzeichnet, daß** die Abdichtkante (3) im geschlossenen Zustand der Tür an einem Überstand (11) des Türflügels (1) anliegt.

## Claims

1. A swinging door leaf (1) for vehicles, in particular for motor vehicles, which is swung inwards by means of pivot arms (6), which are operated by a rotary column (5), and which is provided on its lower horizontal edge with a pivotable sealing strip (3), **characterised in that** the sealing strip (3) consists entirely of rubber-like material or plastics material and is pivotably fastened on the inner lower edge of the door leaf (1) in the closed position of the door leaf (1).

2. A door leaf according to Claim 1, **characterised in that** the height H of the sealing edge (3) is not greater than double the thickness S of the door leaf (1).

3. A door leaf according to any one of the preceding Claims, **characterised in that** the sealing edge (3) is pivotable about a weakened point in its material thickness.

4. A door leaf according to any one of the preceding Claims, **characterised in that**, at least in the zones in which it comes into contact with the pivot lever (6), the sealing edge (3) is provided with an optionally divided skirting strip (17).

5. A door leaf according to any one of the preceding Claims, **characterised in that** the pivot lever (6) is provided with a lamination (18) at least in the zone in which it comes into contact with the sealing edge (3).

6. A door leaf according to any one of the preceding Claims, **characterised in that** the sealing edge (3) is inserted into a retaining profile (16) and is fastened by the latter to the door leaf (1).

7. A door leaf according to any one of the preceding Claims, **characterised in that** in the closed position of the door the sealing edge (3) abuts against a projection (11) of the door leaf (1).

## Revendications

1. Battant de porte (1) pour véhicules, en particulier pour véhicules automobiles, qui est basculé vers l'intérieur à l'aide de bras de basculement (6) actionnés par une colonne tournante (5), et qui est pourvu, sur son arête horizontale inférieure, d'un listel d'étanchéité (3) mobile en basculement, **caractérisé en ce que** le listel d'étanchéité (3) est constitué en continu en un matériau présentant l'élasticité du caoutchouc ou en matière plastique et est fixé en basculement sur l'arête inférieure du battant de porte (1), intérieure dans la position fermée du battant de porte (1).

2. Battant de porte selon la revendication 1, **caractérisé en ce que** la hauteur H de l'arête d'étanchéité (3) n'est pas supérieure au double de l'épaisseur S du battant de porte (1).

3. Battant de porte selon l'une ou l'autre des revendications précédentes, **caractérisé en ce que** l'arête d'étanchéité (3) est mobile en basculement autour d'un emplacement affaibli dans l'épaisseur de son matériau.

4. Battant de porte selon l'une quelconque des revendications précédentes, **caractérisé en ce que** l'arête d'étanchéité (3) est pourvue, du moins dans les zones dans lesquelles elle vient en contact avec le levier basculant (6), d'une baguette de friction (17) également morcelée.

5. Battant de porte selon l'une quelconque des revendications précédentes, **caractérisé en ce que** le levier basculant (6) est pourvu d'une doublure (18), du moins dans les zones dans lesquelles il vient en contact avec l'arête d'étanchéité (3).

6. Battant de porte selon l'une quelconque des revendications précédentes, **caractérisé en ce que** l'arête d'étanchéité (3) est introduite dans un profilé de maintien (16) et est fixée au moyen de celui-ci sur le battant de porte (1).

7. Battant de porte selon l'une quelconque des revendications précédentes, **caractérisé en ce que** l'arête d'étanchéité (3) est en appui, dans l'état fermé de la porte, contre un dépassement (11) du battant de porte (1).
